# EUROPEAN PATENT SPECIFICATION

(11) **EP 1 251 034 B1**
(45) Date of publication and mention of the grant of the patent: **30.05.2007**
(21) Application number: 02252739.4
(22) Date of filing: 18.04.2002
(51) Int. Cl.: H04B 1/08

(54) **Detaching mechanism and information recording and reproducing apparatus using the same**
Lösemechanismus und dessen Verwendung in einem Datenaufzeichnungs- Wiedergabegerät
Mécanisme de détachement et appareil d'enregistrement et de reproduction utilisant celui-ci

(30) Priority: 20.04.2001 JP 2001123179
(43) Date of publication of application: 23.10.2002
(73) Proprietor: Pioneer Corporation, Meguro-ku, Tokyo (JP)
(72) Inventor: Ido, Kenjiro, c/o Pioneer Corporation, Kawagoe-shi, Saitama (JP); Watabe, Shoji, c/o Pioneer Corporation, Kawagoe-shi, Saitama (JP)
(74) Representative: Haley, Stephen

(56) References cited:
- EP-A- 0 507 987
- EP-A- 0 957 003
- US-A- 4 940 414
- US-A- 5 097 392
- US-A- 5 449 228
- US-A- 5 852 594

## Description

The present invention relates to a detaching mechanism and an information recording and reproducing apparatus using the detaching mechanism, and more particularly to a theft-prevention structure in a vehicle-mounted information recording and reproducing apparatus.

CD (Compact Disc), DVD (Digital Versatile Disc) or MD (Mini Disc) are the well-known information recording and reproducing apparatuses. In recent years, there have been proposed various configurations in which such an information recording and reproducing apparatus is mounted in a vehicle.

Since the vehicle-mounted information recording and reproducing apparatus is relatively expensive and has a small structure, the apparatus can be detached even in the case of being mounted in the vehicle, so that there is a great risk of suffering theft.

Conventionally, as a structure for theft prevention, there is a structure constructed so that the circumference of an operating panel is fixed by a frame member which is a member separate from the information reproducing apparatus and the frame member can be detached by a special tool, or a structure in which the whole surface of an operating panel is coated with a cover capable of being integrated with an instrument panel in which this operating panel is mounted.

In the theft-prevention structure, since there is the structure constructed so that the detaching cannot be performed by the member separate from the information recording and reproducing apparatus, there are problems that the number of parts increases or the detaching cannot be performed unless a tool is carried in the case of detaching at the time of maintenance.

In order to solve such problems, there is also a structure in which a theft-prevention mechanism is provided in the information recording and reproducing apparatus itself. This structure is constructed so that the information recording and reproducing apparatus body and the whole operating panel of this body are separably provided to form the so-called detaching mechanism and operations of switches and the like provided in the operating panel cannot be performed in the side of the information recording and reproducing apparatus of the case of separating the whole operating panel.

This structure has an effect of recognizing that theft is useless by being constructed so as to be able to decide that the information recording and reproducing apparatus cannot be operated easily from the outside by detaching the operating panel from the information recording and reproducing apparatus and keeping its state.

However, in the detaching mechanism, there are problems in operability or susceptibility to dropping in the case of detaching. That is, while this kind of vehicle mounted information recording and reproducing apparatus is relatively downsized since space for installation is limited, the operating panel is relatively upsized in order to prevent an error operation. As a result of this, the detached operating panel is relatively large and voluminous and is inconvenient to carry.

Also, in case that the operating panel breaks off as soon as an engagement stop part is disengaged from the front of the information recording and reproducing apparatus, there is a danger that the operating panel drops as it is unless the operating panel is supported by hand and the panel or a switch and the like protruding from the panel surface is damaged. Examples of such devices can be found in US-A-5097392, US-A-5852594 and EP-A1-0507987.

In view of the aforementioned problems, an object of the invention is to provide a detaching mechanism having a structure capable of surely preventing careless dropping at the time of attachment and detachment to prevent damage to a separable operating panel while improving attachment and detachment operability, and an information recording and reproducing apparatus using this mechanism.

According to the invention, there is provided an apparatus having a detaching mechanism, the apparatus comprising:
an operating panel having a recess part defined by a plurality of surfaces including support surfaces; and
detachable member being a part of the operating panel, and being held within said recess part;
the detaching mechanism detachably retaining the detachable member in said recess part,
characterised by:
   the detachable member having a hinge part, and the operating panel having a rod-shaped hinge receiving part in said recess part, said hinge receiving part being a fulcrum for the detachable member;
   the hinge part of the detachable member being mounted in the rod-shaped hinge receiving part so that the detachable member can be opened or closed and engaged or disengaged with respect to the support surfaces;
   the detaching mechanism being arranged to pivot the detachable member from a mounting position in which the detachable member is held within the recess part to a forward-leaning posture in which a part of the detachable member is out of the recess part;
   said detachable member having sloped surfaces at its lateral edges continuous with sloped support surfaces of the recess part; and
   said sloped surfaces of the detachable member and said sloped surfaces of the recess part being tapered so that the distance between said sloped surfaces is narrower toward the hinge part of the detachable member and wherein the sloped surfaces of the detachable member abut on the sloped surfaces of the operating panel during opening when the detachable member is in the forward-leaning posture to maintain the detachable member in the forward-leaning posture.

In the invention, only a part of the operating panel can be attached to or detached from the support surface and the forward-leaning posture can be set at the time of attachment or detachment, so that careless dropping does not occur. In addition, separation can be performed in this state, so that a part of the operating panel stopping in the forward-leaning posture can be pulled out and detached from the support surface. A part of the operating panel can be detached easily by releasing a mounted state of the hinge part in the hinge receiving part.

In the invention when a part of the operating panel is opened, both the lateral edges interfere with the slope surfaces of the side of the support surfaces and an opening operation of a part of the operating panel is regulated. As a result of this, the opening operation is stopped halfway and the forward-leaning posture is maintained and careless dropping can be prevented.

According to the invention, as part of the operating panel, an engagement stop part capable of engaging or disengaging with respect to the support surface is provided in a position opposite to the hinge part.

According to the invention, an information recording and reproducing apparatus uses the above mechanism.

In the invention, only a part of the operating panel in the information recording and reproducing apparatus can be opened or closed with respect to the support surface which is the other part and also the forward-leaning posture can be maintained during opening. As a result of this, in the case of a small operating panel, susceptibility to dropping of a part of the panel can be prevented and also detachment can be performed from the forward-leaning posture, so that even in the case of a small operating panel, the operating panel in a state of no dropping is targeted and detachment can be performed with a margin.
In the Drawings;
Fig. 1 is an external view of an information recording and reproducing apparatus by an example for describing an embodiment of the invention.
Fig. 2 is a perspective view showing one aspect of the information recording and reproducing apparatus shown in Fig. 1.
Fig. 3 is an arrow sectional view of a direction shown by numeral (3) in Fig. 1.
Figs. 4A and 4B are schematic views describing a principle of setting a forward-bent posture of an operating panel in the information recording and reproducing apparatus shown in Fig. 1.
Fig. 5 is a perspective view showing the forward-bent posture of the operating panel in the information recording and reproducing apparatus shown in Fig. 1.

The present invention will be described in detail with reference to the accompanying drawings.

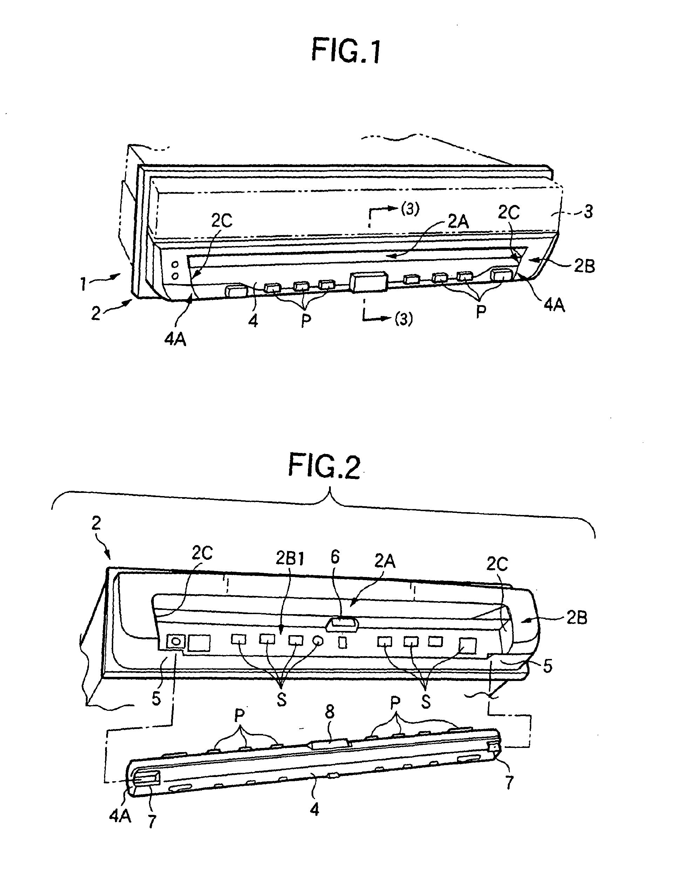

Fig. 1 is an external view of an information recording and reproducing apparatus using a detaching mechanism according to an embodiment of the invention. The information recording and reproducing apparatus shown in Fig. 1 is an apparatus for reproducing information made from a storage medium such as CD (Compact Disc), DVD (Digital Versatile Disc) or MD (Mini Disc), and the embodiment is targeted for a vehicle-mounted car audio apparatus (hereinafter called a vehicle-mounted information recording and reproducing apparatus).

In Fig. 1, the vehicle-mounted information recording and reproducing apparatus 1 comprises an apparatus body 2 in which an operating panel 2B equipped with a slot-in opening 2A capable of inserting a record medium and various operating switches and the like is provided in the front, and a display panel 3 equipped with a liquid crystal panel in the front.

The apparatus body 2 is provided with a reproducing apparatus of the record medium (not shown), and it is constructed so that setting of reproducing conditions or pullout of the record medium can be performed according to operations of the operating switches and the like with which the operating panel 2B is equipped.

The display panel 3 is constructed so that a screen structure acting as a monitor can be obtained by pulling out a part of the display panel to the front and raising it (not shown).

The operating panel 2B is equipped with a detaching grill 4 in which a part of the operating panel 2B can be separated from the other part, and in the detaching grill 4, push buttons (for the sake of convenience, shown by numeral P in Fig. 1) capable of operating the various switches and the like provided in the operating panel 2B are provided in parallel.

As shown in Fig. 2, it is constructed so that a part of the push button P protrudes to the rear of the detaching grill 4 and the protruding portion can be opposed to the switch and the like (for the sake of convenience, shown by numeral S in Fig. 2) provided in the side of the operating panel 2B to be interlocked.

It is constructed so that a case of attaching the detaching grill 4 to the operating panel 2B to form a part of the operating panel 2B as shown in Fig. 1 and a case of detaching the detaching grill 4 from the operating panel 2B as shown in Fig. 2 can be selected by a detaching mechanism described below.

The detaching mechanism capable of setting attachment and detachment postures of the detaching grill 4 includes a structure in which the detaching grill 4 can be held in a forward-bent posture at the time of disengaging an engagement state with respect to the operating panel 2B while detachably supporting the detaching grill 4, and its structure includes hinge receiving parts 5 and an engagement stop part 6 provided in the side of the operating panel 2B, and hinge parts 7 and an engagement part 8 provided in the side of the detaching grill 4 as shown in Fig.2.

A recess part 2B1 for forming support space capable of holding the detaching grill 4 is provided in the side of the operating panel 2B, and rod-shaped hinge receiving parts 5 which are one of members forming the detaching mechanism in the side of the operating panel 2B are provided in the lower portions of both sides in the recess part 2B1, and a hook-shaped engagement stop part 6 which is one of the members forming the detaching mechanism in the side of the operating panel 2B similarly is provided in the upper portion of the lateral center of the recess part 2B1.

It is constructed so that recess-shaped hinge parts 7 having downward openings which are one of the members forming the detaching mechanism in the side of the detaching grill 4 by integral molding in the lower portions of both the lateral sides of the detaching grill 4 can be mounted and supported suitably with respect to the hinge receiving parts 5. As a result of this, it is constructed so that the detaching grill 4 is supported openably with respect to the recess part 2B1 of the operating panel 2B which becomes a support surface of the detaching grill 4 using the hinge receiving parts 5 as a fulcrum and also is detached from the operating panel 2B by pulling the hinge parts 7 from the hinge receiving parts 5.

It is constructed so that an engagement member 8 which is one of the members forming the detaching mechanism provided opposite to this engagement stop part 6 in the side of the detaching grill 4 can be engaged and disengaged with respect to an engagement stop part 6 provided in the upper portion of the lateral center of the recess part 2B1.

It is constructed so that the engagement member 8 is provided retractably with respect to the engagement stop part 6 using an elastic body such as a spring (not shown) and is disengaged from the engagement stop part 6 by pushing and operating a part of the detaching grill 4 exposed to the front.

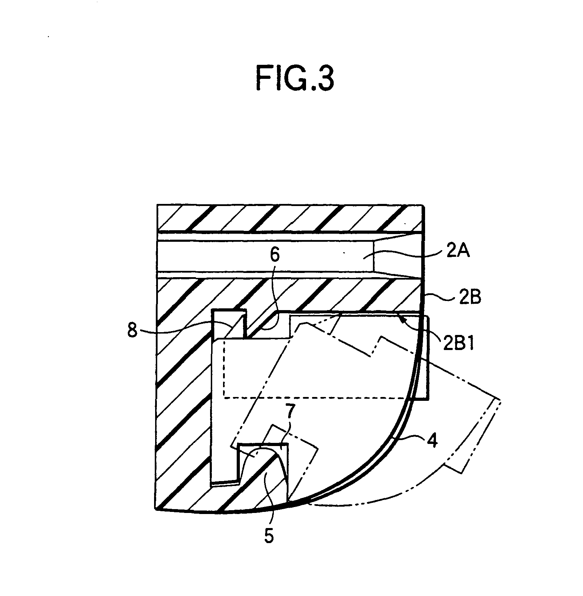

Fig. 3 is an arrow view of a direction shown by numeral (3) in Fig. 1, and an opening and closing state of the detaching grill 4 is shown in Fig. 3.

In Fig. 3, when the engagement member 8 is engaged to the engagement stop part 6, a state in which the detaching grill 4 is held within the recess part 2B1 of the operating panel 2B is maintained and when the engagement member 8 is disengaged from the engagement stop part 6, rotation can be performed in a direction in which the detaching grill 4 is opened using the hinge receiving parts 5 as a fulcrum (a state shown by dash and double-dot lines in Fig. 3).

In the detaching grill 4 in Fig. 1, both the lateral edges corresponding to a direction perpendicular to an opening and closing direction are constructed by slope surfaces 4A continuous with support surfaces of the recess part 2B1 in the operating panel 2B, namely opening edges 2C of the recess part 2B1, and this slope surface 4A is formed in a taper surface which becomes narrower toward the side of an opening and closing support position of the operating panel 2B, namely the hinge receiving parts 5.

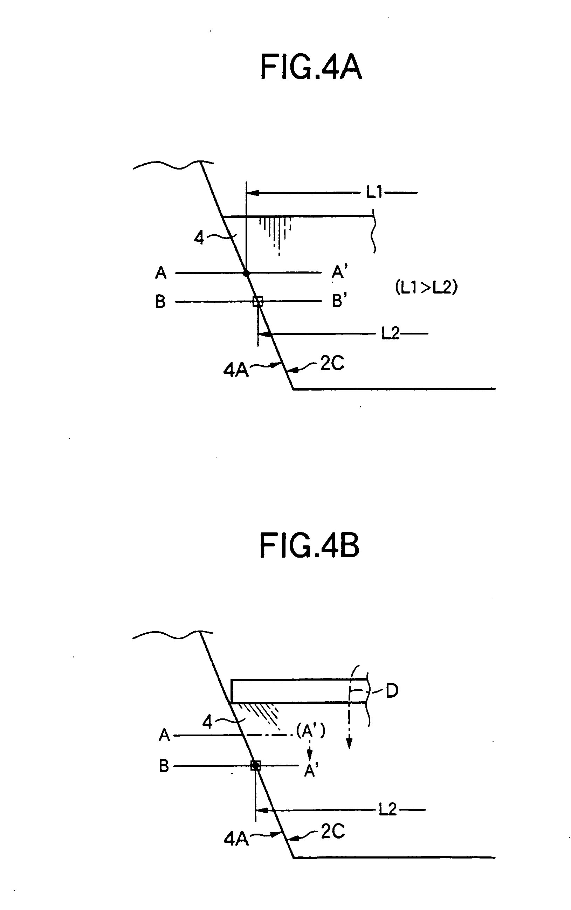

The slope surfaces 4Aof the detaching grill 4 are provided in order to set a forward-bent posture at the time of opening the detaching grill 4, and its principle is shown in Figs. 4A and 4B.

Figs. 4A and 4B show an opposite relation between an arbitrary position of the side of the detaching grill 4 and a position of the opening edges of the recess part 2B1 opposite to this detaching grill 4, and Fig. 4A shows a state in which the detaching grill 4 is closed and held within the recess part 2B1, and Fig. 4B shows a process of opening the detaching grill 4.

In Figs. 4A and 4B, the slope surface 4A has a length in which an arbitrary position (position shown by numeral A') of the opening end side with respect to a slope surface 2C of the opening edge interferes with the slope surface 2C of the opening edge side by opening of the detaching grill 4. As a result of this, it is constructed so as to stop further opening since the arbitrary position A' of the side of the detaching grill 4 interferes and abuts with the slope surface 2C of the opening edge when the arbitrary position A' of the side of the detaching grill 4 in a position relation shown by numerals A and A' in Fig. 4A is opposed to a position (position shown by numeral B in Fig. 4B) shorter (length shown by numeral L2) than a length (length shown by numeral L1) leading to the arbitrary position A' of the detaching grill 4 in the opening edge side as shown in Fig. 4B by opening (a state shown by numeral D in Fig. 4B) of the detaching grill 4.

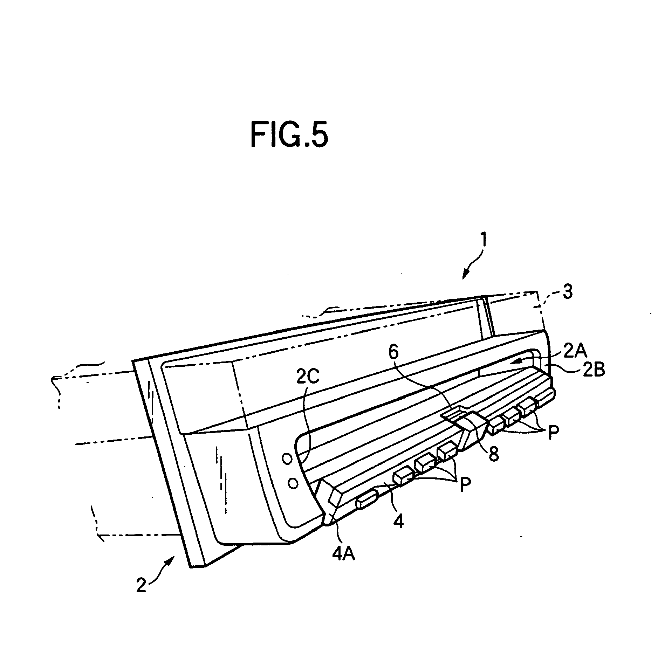

Fig. 5 is an external view of a state shown in Fig. 4B, and in the detaching grill 4, both the edges of the opening edge side abut on the slope surfaces of the opening edge side during opening and the opening is stopped. An opening angle of the detaching grill 4 shown in Fig. 5 is set to an angle capable of pulling the hinge parts 7 of the detaching grill 4 from the hinge receiving parts 5 (see Figs. 2 and 3).

Since the embodiment has the structure described above, in the case that the detaching grill 4 is held within the recess part 2B1 in the operating panel 2B and is attached to the operating panel 2B, as shown in Fig. 2, the hinge parts 7 of the detaching grill 4 separated from the operating panel 2B are fitted into the hinge receiving parts 5 of the side of the recess part 2B1 and are rotated in a closing direction using the hinge receiving parts 5 as a fulcrum.

When the detaching grill 4 is inserted into the recess part 2B1, as shown in Fig. 3, the engagement member 8 of the side of the detaching grill 4 interferes with the engagement stop part 6 of the side of the recess part 2B1 and is pushed down by the engagement stop part 6 against the own energization force and when the engagement member 8 gets over the engagement stop part 6, the engagement member 8 engages with the engagement stop part 6 by the own energization force. As a result of this, a state in which the detaching grill 4 is held within the recess part 2B1 can be maintained.

In this state, when the push button P exposed to the front of the detaching grill 4 is operated, the operating switch and the like of the side of the operating panel 2B interlocked with this push button P works and reproduction or pullout of the record medium can be performed.

On the other hand, in the case of preventing theft, the detaching grill 4 is detached from the operating panel 2B. The switches on the operating panels cannot be operated at the side of the information recording and reproducing apparatus in the state that the detaching grill 4 is completely detached from the operating panel 2B. This structure contributes to preventing the information recording and reproducing apparatus from being stolen.

In this case, the engagement member 8 which is a component member of the detaching mechanism in the side of the detaching grill 4 is disengaged from the engagement stop part 6 which is a component member of the detaching mechanism in the side of the operating panel 2B and the detaching grill 4 is rotated in an opening direction.

In the detaching grill 4, the slope surface 4A interferes and abuts with the slope surface 2C of the opening edge of the recess part 2B1 as shown in Figs. 4A and 4B in a process of rotating the detaching grill 4 in an opening direction, so that the rotation is stopped against the moment by the own weight. As a result of this, during the disengagement and rotation, the rotation is automatically stopped and a forward-bent posture is maintained and the rotation is not performed until dropping, so that the detaching grill 4 can be prevented from dropping carelessly from the recess part 2B1. As a result of this, damage to the side of the detaching grill 4 occurring in the case that the detaching grill 4 has dropped carelessly can be prevented.

The detaching grill 4 stopping in the forward-bent posture is detached from the recess part 2B1 of the operating panel 2B by grasping the hinge parts 7 from the hinge receiving parts 5 in a pullout direction and releasing amounting state.

Since the forward-bent posture is maintained once before the detaching grill 4 is detached from the operating panel 2B, a user does not require time and effort to support the detaching grill 4 at the time of detaching and also it is unnecessary to make preparation for pullout in response to a rotational speed by the moment, so that operability at the time of detaching can be improved.

According to the embodiment, a situation in which the detaching grill 4 forming a part of the operating panel 2B drops carelessly can be prevented, so that the detaching grill 4 can be downsized. Because of this, the operating switches and the like of the side of the operating panel 2B capable of operation by the detaching grill 4 can be downsized, so that circumstances difficult to operate the switches and the like by fingers can be formed even if the detaching grill 4 is detached. As a result of this, the degree of difficulty of operation in the operating panel 2B capable of observation from the outside with the detaching grill 4 detached can be recognized easily.

As is evident from the embodiment described above, according to the invention, a part of an operating panel can be detached from the other support surface, so that a detached component can be downsized as compared with the case of detaching the whole operating panel. As a result of this, a theft-prevention structure of an information recording and reproducing apparatus can be obtained in a state in which inconvenience of conveyance is improved.

In addition, a forward-bent posture can be maintained in an opening process as well as attachment and detachment postures when a part of the operating panel is detached, so that damage to a component targeted for detaching can be prevented by preventing careless dropping.

## Claims

1. An apparatus (2) having a detaching mechanism (4,5,6,7,8), the apparatus comprising:
an operating panel (2B) having a recess part (2B1) defined by a plurality of surfaces including support surfaces; and
a detachable member (4) being a part of the operating panel (2B), and being held within said recess part (2B1);
the detaching mechanism detachably retaining the detachable member in said recess part (2B1);
the detachable member (4) having a hinge part (7), and the operating panel having a rod-shaped hinge receiving part (5) in said recess part (2B1), said hinge receiving part (5) being a fulcrum for the detachable member (4);
the hinge part (7) of the detachable member (4) being mounted in the rod-shaped hinge receiving part (5) so that the detachable member (4) can be opened or closed and engaged or disengaged with respect to the support surfaces;
the detaching mechanism being arranged to pivot the detachable member (4) from a mounting position in which the detachable member is held within the recess part (2B1) to a forward-leaning posture in which a part of the detachable member (4) is out of the recess part (2B1)
**characterized by:**
said detachable member (4) having sloped surfaces (4A) at its lateral edges continuous with sloped support surfaces (2C) of the recess part (2B1); and
said sloped surfaces (4A) of the detachable member (4) and said sloped surfaces (20) of the recess part (2B1) being tapered so that the distance between said sloped surfaces is narrower toward the hinge part (7) of the detachable member (4) and wherein the sloped surfaces (4A) of the detachable member (4) abut on the sloped surfaces (20) of the operating panel (2B) during opening when the detachable member (4) is in the forward-leaning posture to maintain the detachable member (4) in the forward-leaning posture.

2. The apparatus (2) as defined in claim 1, wherein the detachable member (4) includes an engagement member (8) for engaging or disengaging the detachable member (4) and the support surfaces of the operating panel (2B).

3. The apparatus (2) as defined in claim 2, wherein the engagement member (8) of the detachable member (4) is located in a position opposite to the hinge part (7).

4. The apparatus (2) as defined in claim 1, wherein the detachable member (4) includes a first operating switch (P); and
the operating panel (2B) includes a second operating switch (S) corresponding to the first operating switch of the detachable member.

5. The apparatus (2) as defined in claim 4, wherein the second operating switch (S) of the operating panel (2B) is not operable unless the detachable member (4) is engaged with the operating panel.

6. An information recording and reproducing apparatus (1) comprising the apparatus (2) of claim 1.

## Patentansprüche

1. Vorrichtung (2) mit Lösemechanismus (4, 5, 6, 7, 8), die umfasst:
eine Schalttafel (2B) mit einem vertieften Teil (2B1), der durch eine Mehrzahl von Flächen einschließlich Tragflächen gebildet ist; und
ein lösbares Element (4), das Teil der Schalttafel (2B) ist und im vertieften Teil (2B1) gehalten wird;
wobei der Lösemechanismus das lösbare Element (4) im vertieften Teil (2B) lösbar hält;
wobei das lösbare Element (4) ein Scharnierteil (7) hat und die Schalttafel (2B) ein stangenförmiges Scharnieraufnahmeteil (5) im vertieften Teil (2B1) hat, wobei das Scharnieraufnahmeteil (5) ein Drehpunkt für das lösbare Element (4) ist;
wobei das Scharnierteil (7) des lösbaren Elementes (4) im stangenförmigen Scharnieraufnahmeteil (5) derart montiert ist, dass das lösbare Element (4) geöffnet oder geschlossen sowie bezüglich der Tragflächen in oder außer Eingriff gebracht werden kann;
wobei der Lösemechanismus derart angeordnet ist, dass er das lösbare Element (4) schwenken kann: von einer Montageposition, in der das lösbare Element in dem vertieften Teil (2B1) gehalten wird, in eine nach vorn geneigte Stellung, in der ein Teil des lösbaren Elements (4) sich außerhalb des vertieften Teils (2B1) befindet;
**dadurch gekennzeichnet,**
**dass** das lösbare Element (4) an seinen seitlichen Rändern schräge Flächen (4A) hat, die mit schrägen Tragflächen (2C) des vertieften Teils (2B1) sich gleichsinnig erstrecken; und
das die schrägen Flächen (4A) des lösbaren Elements (4) sowie die schrägen Flächen (20) des vertieften Teils (2B1) derart schräg sind, dass der Abstand zwischen den schrägen Flächen zum Scharnierteil (7) des lösbaren Elements (4) schmäler ist, wobei die schrägen Flächen (4A) des lösbaren Elements (4) an den schrägen Flächen (20) der Schalttafel (2B) während des Öffnens anliegen, wenn das lösbare Element (4) sich in der nach vorn geneigten Position befindet, um das lösbare Element (4) in der nach vorn geneigten Position zu halten.

2. Vorrichtung (2) nach Anspruch 1, bei der das lösbare Element (4) ein Eingriffselement (8) enthält zum Ergreifen oder Lösen des lösbaren Elements (4) und der Tragflächen der Schalttafel (2B).

3. Vorrichtung (2) nach Anspruch 2, bei der das Eingriffselement (8) des lösbaren Elements (4) in einer dem Scharnierteil (7) gegenüberliegenden Position angebracht ist.

4. Vorrichtung (2) nach Anspruch 1, bei der das lösbare Element (4) einen ersten Betätigungsschalter (P) enthält; und
bei der die Schalttafel (2B) einen zweiten Betätigungsschalter (S) enthält, entsprechend dem ersten Betätigungsschalter (P) des lösbaren Elements (4).

5. Vorrichtung (2) nach Anspruch 4, bei der der zweite Betätigungsschalter (S) der Schalttafel (2B) nicht betätigbar ist, außer wenn das lösbare Element (4) mit der Schalttafel (2B) in Eingriff ist.

6. Datenaufzeichnungs- und Wiedergabevorrichtung, die die Vorrichtung (2) von Anspruch 1 umfasst.

## Revendications

1. Appareil (2) ayant un mécanisme de détachement (4, 5, 6, 7,8), l'appareil comprenant:
un panneau de commande (2B) ayant une partie d'évidement (2B1), définie par une pluralité de surfaces comprenant des surfaces de support ; et
un élément détachable (4) qui fait partie du panneau de commande (2B), et qui est maintenu dans ladite partie d'évidement (2B1);
le mécanisme de détachement retenant de manière détachable l'élément détachable dans ladite partie d'évidement (2B1) ;
l'élément détachable (4) ayant une partie d'articulation (7), et le panneau de commande ayant une partie de réception d'articulation en forme de tige (5) dans ladite partie d'évidement (2B1), ladite partie de réception d'articulation (5) étant un pivot pour l'élément détachable (4) ;
la partie d'articulation (7) de l'élément détachable (4) étant montée dans la partie de réception d'articulation en forme de tige (5) de sorte que l'élément détachable (4) peut être ouvert ou fermé et mis en prise ou dégagé par rapport aux surfaces de support ;
le mécanisme de détachement étant agencé pour faire pivoter l'élément détachable (4) à partir d'une position de montage dans laquelle l'élément détachable est maintenu à l'intérieur de la partie d'évidement (2B1) jusqu'à une position penchée en avant dans laquelle une partie de l'élément détachable (4) est à l'extérieur de la partie d'évidement (2B1),
**caractérisé en ce qu'**il comprend :
ledit élément détachable (4) ayant des surfaces inclinées (4a) au niveau de ses bords latéraux continus avec des surfaces de support inclinées (2C) de la partie d'évidement (2B1) ; et
lesdites surfaces inclinées (4A) de l'élément détachable (4) et lesdites surfaces inclinées (20) de la partie d'évidement (2B1) étant progressivement rétrécies de sorte que la distance entre lesdites surfaces inclinées est rétrécie vers la partie d'articulation (7) de l'élément détachable (4) et dans lequel des surfaces inclinées (4A) de l'élément détachable (4) viennent en butée sur les surfaces inclinées (20) du panneau de commande (2B) pendant l'ouverture lorsque l'élément détachable (4) est dans la position penchée en avant pour maintenir l'élément détachable (4) dans la position penchée en avant.

2. Appareil (2) selon la revendication 1, dans lequel l'élément détachable (4) comprend un élément de mise en prise (8) pour mettre en prise ou dégager l'élément détachable (4) et les surfaces de support du panneau de commande (2B).

3. Appareil (2) selon la revendication 2, dans lequel l'élément de mise en prise (8) de l'élément détachable (4) est situé dans une position opposée à la partie d'articulation (7) .

4. Appareil (2) selon la revendication 1, dans lequel l'élément détachable (4) comprend un premier interrupteur de commande (P) ; et
le panneau de commande (2B) comprend un second interrupteur de commande (S) correspondant au premier interrupteur de commande de l'élément détachable.

5. Appareil (2) selon la revendication 4, dans lequel le second interrupteur de commande (S) du panneau de commande (2B) ne peut pas fonctionner à moins que l'élément détachable (4) soit mis en prise avec le panneau de commande.

6. Appareil de reproduction et d'enregistrement d'information (1) comprenant l'appareil (2) de la revendication 1.
